# EUROPÄISCHE PATENTSCHRIFT

(11) **EP 0 785 832 B1**
(45) Veröffentlichungstag und Bekanntmachung des Hinweises auf die Patenterteilung: **09.02.2000**
(21) Anmeldenummer: 96918690.7
(22) Anmeldetag: 13.06.1996
(51) Int. Cl.: B21D 5/00, B21D 43/26

(54) **WERKSTÜCKANSCHLAGEINRICHTUNG**
WORKPIECE STOP DEVICE
DISPOSITIF DE BUTEE POUR PIECES A USINER

(30) Priorität: 11.08.1995 DE 19529570
(43) Veröffentlichungstag der Anmeldung: 30.07.1997
(73) Patentinhaber: Reinhardt Maschinenbau GmbH, 71065 Sindelfingen (DE)
(72) Erfinder: KUTSCHKER, Wolfgang, D-71034 Böblingen (DE)
(74) Vertreter: Hoeger, Stellrecht & Partner
(86) Internationale Anmeldenummer: EP9602555
(87) Internationale Veröffentlichungsnummer: WO9706903

(56) Entgegenhaltungen:
- DE-A- 2 017 474
- FR-A- 1 338 361
- FR-A- 2 052 109

## Beschreibung

Die Erfindung betrifft eine Werkstückanschlageinrichtung für eine Werkzeugmaschine, insbesondere eine Blechbearbeitungsmaschine, umfassend ein Trägergestell, mehrere am Trägergestell in einer quer zu einer Anschlagrichtung verlaufenden Querrichtung im Abstand voneinander angeordnete, in Anschlagrichtung bewegbare Anschlagelemente, mit jeweils einem Anschlagarm, welcher mit mindestens zwei in Anschlagrichtung im Abstand voneinander angeordneten Anschlagflächen versehen ist, die durch eine Schwenkbewegung des Anschlagelements von einer unterhalb einer Auflagefläche angeordneten inaktiven Stellung in eine über die Auflagefläche überstehende aktive Stellung bringbar sind, wobei jedes Anschlagelement in eine erste Stellung bringbar ist, in welcher eine erste nächstliegend der Werkzeugmaschine angeordnete Anschlagfläche in der aktiven Stellung steht, und in eine zweite Stellung bringbar ist, in welcher eine zweite Anschlagfläche in der aktiven Stellung steht, während die werkzeugmaschinenseitig derselben liegenden Anschlagflächen in der inaktiven Stellung stehen.

Eine Werkstückanschlageinrichtung ist aus dem deutschen Patent 20 17 474 bekannt.

Bei dieser Werkstückanschlageinrichtung ist ein Tisch mit reihenweise angeordneten Anschlagelementen vorgesehen, wobei eine Reihe von Anschlagelementen in die aktive Stellung bringbar ist.

Eine derartige Werkstückanschlageinrichtung ist aufwendig herzustellen.

Aus der FR-A-2 052 109 ist eine Werkstückanschlageinrichtung für eine Blechbiegemaschine bekannt, bei welcher ein einen Zylinder und einen Antrieb umfassendes Element auf einer Gleitführung angeordnet und in Anschlagrichtung lediglich zur Justierung der Lage des Zylinders relativ zum Werkzeug der Biegepresse einstellbar ist. Auf dem Zylinder sind in Anschlagrichtung im Abstand voneinander angeordnete Biegeflächen vorgesehen, die durch eine Drehung des Zylinders um eine parallel zur Anschlagrichtung verlaufende Achse von einer inaktiven Stellung in eine aktive Stellung oder umgekehrt überführbar sind, wobei jeweils die zwischen der aktiven Anschlagfläche und dem Preßwerkzeug liegenden Anschlagflächen in der inaktiven Stellung stehen.

Darüber hinaus ist in diesem Dokument auch das Vorsehen mehrerer derartiger Anschlagelemente in einer Querrichtung im Abstand voneinander vorgesehen.

Der Erfindung liegt ausgehend von der FR-A-2 052 109 die Aufgabe zugrunde, eine Werkstückanschlageinrichtung der gattungsgemäßen Art derart zu verbessern, daß diese bei konstruktiv einfachem Aufbau nicht nur durch den Abstand der Anschlagelemente in Anschlagrichtung voneinander definierte diskrete Anschlagpositionen zuläßt, sondern in einfacher Weise frei durch einen Einstellantrieb festlegbare Anschlagpositionen.

Diese Aufgabe wird bei einer Werkstückanschlageinrichtung der eingangs beschriebenen Art erfindungsgemäß dadurch gelöst, daß die Anschlagelemente gemeinsam auf mindestens einem durch einen Einstellantrieb gegenüber dem Trägergestell in Anschlagrichtung verfahrbaren und positionierbaren Einstellwagen angeordnet sind und daß die Anschlagelemente in der Querrichtung zur Anschlagrichtung in unterschiedlichen Positionen positionierbar sind.

Der Vorteil der erfindungsgemäßen Lösung ist darin zu sehen, daß diese sehr einfach aufgebaut werden kann, da für mindestens zwei aktive Stellungen eines Anschlagelements nur ein Schwenkantrieb erforderlich ist, während bei der aus dem Stand der Technik bekannten Lösung zum Überführen einer Reihe von Anschlagflächen in ihre aktive Stellung ein Antrieb erforderlich war.

Darüber hinaus ist auch der Steuerungsaufwand dadurch begrenzbar, daß nur ein Schwenkantrieb ansteuerbar ist und somit lediglich die Notwendigkeit besteht, dessen Stellungen abzufragen und zu erfassen.

Der besondere Vorteil der erfindungsgemäßen Lösung ist ferner auch darin zu sehen, daß durch die Positionierbarkeit der in der Querrichtung im Abstand voneinander angeordneten Anschlagelemente in unterschiedlichen Positionen, d. h. mit unterschiedlichen Abständen in Querrichtung, eine einfache Anpassung an verschiedene Platinenbreiten und Platinenformen möglich ist, da in vielen Fällen eine definierte Anschlagfläche an der jeweiligen Platine nur an einer bestimmten Position in der Querrichtung möglich ist.

Schließlich hat die erfindungsgemäße Lösung noch den großen Vorteil, daß sie die Möglichkeit eröffnet, einen optimalen Kompromiß zwischen dem Aufwand für das Verfahren des Einstellwagens und dem Aufwand für das Aktivieren und Positionieren der Anschlagflächen zu finden.

Die Verstellbarkeit des Anschlagarms kann in unterschiedlichster Art und Weise realisierbar sein. Beispielsweise ist eine Verstellbarkeit des Anschlagarms mittels eines Keilantriebs möglich. Eine besonders vorteilhafte und konstruktiv einfache Lösung sieht vor, daß der Anschlagarm um eine Schwenkachse verschwenkbar ist.

Hinsichtlich der Anordnung des Anschlagarms relativ zur Schwenkachse sind alle Möglichkeiten denkbar. Es wäre beispielsweise möglich, daß sich der Anschlagarm in einer Richtung von der Schwenkachse weg erstreckt. Besonders vorteilhaft ist es jedoch, wenn der Anschlagarm sich beiderseits der Schwenkachse erstreckt, da damit die Bewegungen zum Überführen der einzelnen Anschlagflächen in die aktive Stellung besonders günstig realisiert werden können.

Die erfindungsgemäße Lösung ist insbesondere dann vorteilhaft optimiert, wenn die erste und die zweite Anschlagfläche einen Abstand voneinander aufweisen, welcher größer als ungefähr die Hälfte, noch besser größer als ungefähr zwei Drittel eines Einstellwegs des Einstellwagens ist.

Besonders zweckmäßig ist es dabei, wenn in Anschlagrichtung aufeinanderfolgende Anschlagflächen jeweils einen Abstand voneinander aufweisen, welcher kleiner oder ungefähr gleich dem Einstellweg des Einstellwagens ist, da in diesem Fall ein lückenloses Anschlagen eines Werkstücks über einem Weg, welcher der Summe aus dem Einstellweg und dem Abstand der Anschlagflächen entspricht, möglich ist.

Um die Ansteuerung dieser Anschlagelemente, die prinzipiell jeweils durch einen eigenen Antrieb verschwenkbar sein könnten, zu vereinfachen, ist es vorteilhaft, wenn die Vielzahl von Anschlagelementen gemeinsam verschwenkbar sind, um jeweils dieselbe Anschlagfläche in die aktive Stellung zu bringen.

Vorzugsweise ist dabei vorgesehen, daß mehrere Anschlagelemente auf einem verschwenkbaren und sich in der Querrichtung erstreckenden Anschlagträger sitzen.

Ein derartiger, alle in der Querrichtung nebeneinander angeordneten Anschlagelemente tragender Anschlagträger ist vorzugsweise so ausgebildet, daß er an dem Einstellwagen schwenkbar gelagert ist.

Eine besonders zweckmäßige Lagerung des Anschlagträgers sieht dabei vor, daß dieser mit seinen einander gegenüberliegenden Endbereichen jeweils an einem Einstellwagen gelagert ist. Diese Konstruktion erlaubt es, den Anschlagträger exakt zu führen und zu positionieren.

Eine besonders exakte Führung ist dann möglich, wenn die beiden Einstellwagen aktiv synchron miteinander in Anschlagrichtung bewegbar sind, so daß dadurch eine aktive Parallelführung des Anschlagträgers in allen Positionen der Einstellwagen möglich ist.

Ein besonders vorteilhaftes Ausführungsbeispiel, welches insbesondere eine Anpassung an unterschiedliche Platinenbreiten erlaubt, sieht vor, daß die Anschlagelemente am Anschlagträger in Querrichtung in unterschiedlichen Positionen positionierbar sind.

Eine derartige Positionierung der Anschlagelemente wäre beispielsweise dadurch möglich, daß diese in bestimmten Rasterabständen in Aufnahmen am Anschlagträger einsetzbar sind.

Besonders zweckmäßig ist jedoch ein Ausführungsbeispiel, bei welchem die Anschlagelemente in einer Querführung des Anschlagträgers verschiebbar angeordnet sind, so daß eine stufenlose Positionierung der Anschlagelemente in der Querrichtung möglich ist.

Im Zusammenhang mit der bisherigen Erläuterung der einzelnen Ausführungsbeispiele wurde lediglich vom Vorsehen zweier Anschlagflächen ausgegangen. Besonders vorteilhaft läßt sich die erfindungsgemäße Lösung jedoch dann einsetzen, wenn der Anschlagarm mindestens drei in Anschlagrichtung hintereinanderliegend angeordnete Anschlagflächen aufweist und derart bewegbar ist, daß das Werkstück an jeder der Anschlagflächen ohne Behinderung durch die werkzeugmaschinenseitig derselben liegenden Anschlagflächen anschlagbar ist. Mit dieser Lösung läßt sich der erfindungsgemäß erzielte Vorteil noch vervielfachen, so daß der Einstellweg des Einstellwagens relativ klein gehalten werden kann und durch die drei Anschlagflächen an jedem Anschlagelement ein großer Anschlagbereich realisierbar ist.

Hinsichtlich der Ausbildung der Anschlagelemente und der Anordnung der Anschlagflächen an diesen wurden im Zusammenhang mit der bisherigen Erläuterung der einzelnen Ausführungsbeispiele keine näheren Angaben gemacht. So sieht eine besonders einfach herzustellende Lösung vor, daß das Anschlagelement an seiner vorderen Stirnseite eine erste Anschlagfläche trägt und in einem hinteren Bereich einen die andere Anschlagfläche aufweisenden Anschlagkörper.

Zweckmäßigerweise ist dabei der Anschlagkörper so ausgebildet, daß er sich über den Anschlagarm erhebt und stirnseitig die sich quer zur Anschlagrichtung erstreckende andere Anschlagfläche trägt.

Im einfachsten Fall ist der Anschlagarm als langgestreckte Leiste ausgebildet, welche stirnseitig die eine Anschlagfläche trägt und insbesondere rückseitig mit einer Erhebung versehen ist, welche stirnseitig die andere Anschlagfläche trägt.

Eine besonders vorteilhafte Lösung, insbesondere eine solche, welches noch das Verschieben von Platinen selbst bei über die Auflagefläche überstehenden zweiten Anschlagflächen erlaubt, sieht vor, daß der Anschlagkörper in Anschlagrichtung gesehen eine nach oben ansteigende seitliche Schrägen aufweisende, beispielsweise eine im wesentlichen dreieckige oder trapezförmige Querschnittsform aufweist.

Hinsichtlich der Ausbildung eines Einstellantriebs zur Positionierung der Einstellwagen wurden ebenfalls im Zusammenhang mit der bisherigen Erläuterung der einzelnen Ausführungsbeispiele keine näheren Angaben gemacht. So wäre es beispielsweise möglich, den Einstellantrieb als Spindelantrieb auszubilden.

Besonders vorteilhaft, insbesondere aus Gründen der konstruktiven Einfachheit ist es jedoch, wenn der Einstellantrieb als Spindel-, Ketten- oder Riementrieb, insbesondere mit vorgespanntem Riemen, ausgebildet ist.

Eine besonders zweckmäßige Ausführungsform der erfindungsgemäßen Lösung sieht vor, daß die Werkstückanschlageinrichtung einen Tisch bildet, welcher die Auflagefläche für Werkstücke, beispielsweise Platinen, definiert.

Ein derartiger Tisch ist dabei vorzugsweise so ausgebildet, daß er einen Tischrahmen aufweist, in welchen Tischbleche in Querrichtung in verschiedenen Positionen einlegbar sind.

Insbesondere sind dabei die Tischbleche streifenförmig ausgebildet und erstrecken sich in Anschlagrichtung, wobei sie mit einer Vorderseite und einer Hinterseite auf den Tischrahmen auflegbar sind.

Besonders günstig lassen sich die erfindungsgemäßen Anschlagelemente dann positionieren, wenn zwischen in Querrichtung nebeneinander liegenden und insbesondere in verschiedenen Positionen einlegbaren Tischblechen ein Freiraum gegeben ist, in welchem eines der Anschlagelemente in Anschlagrichtung verschiebbar ist.

Weitere Merkmale und Vorteile der Erfindung sind Gegenstand der nachfolgenden Beschreibung sowie der zeichnerischen Darstellung von zwei Ausführungsbeispielen.

In der Zeichnung zeigen:
- Fig. 1: eine Seitenansicht eines ersten Ausführungsbeispiels einer Werkstückanschlageinrichtung für eine Blechbearbeitungsmaschine;
- Fig. 2: eine Draufsicht auf eine Werkstückanschlageinrichtung gemäß Fig. 1;
- Fig. 3: einen Schnitt längs Linie 3-3 in Fig. 2;
- Fig. 4: einen Schnitt längs Linie 4-4 in Fig. 2 in einer ersten aktiven Stellung; und
- Fig. 5: einen Schnitt ähnlich Fig. 4 in einer zweiten aktiven Stellung;
- Fig. 6: eine Ansicht von hinten auf eine Variante eines Anschlagelements in Richtung eines Pfeils P in Fig. 2 und
- Fig. 7: einen Schnitt ähnlich Fig. 4 durch ein zweites Ausführungsbeispiel.

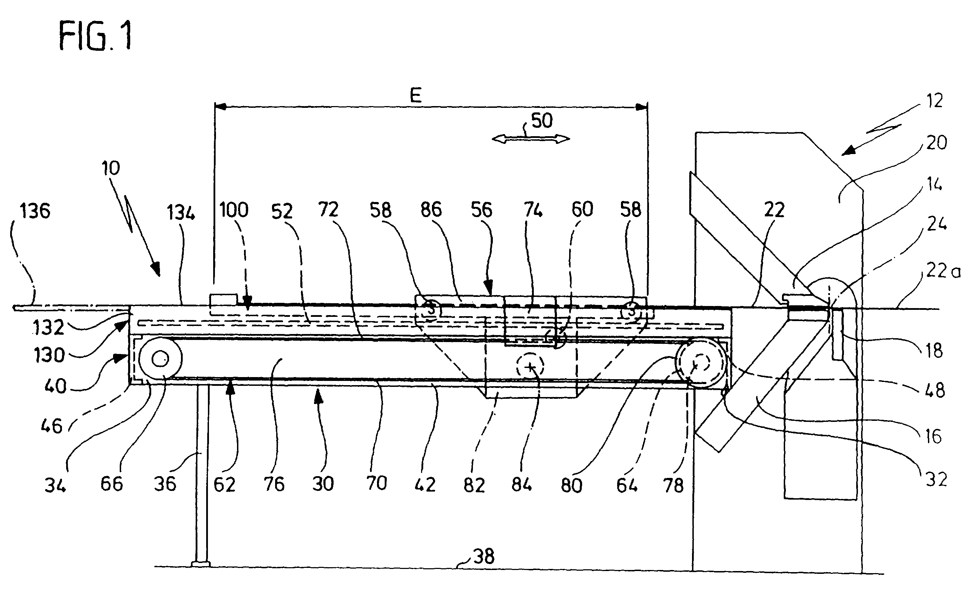

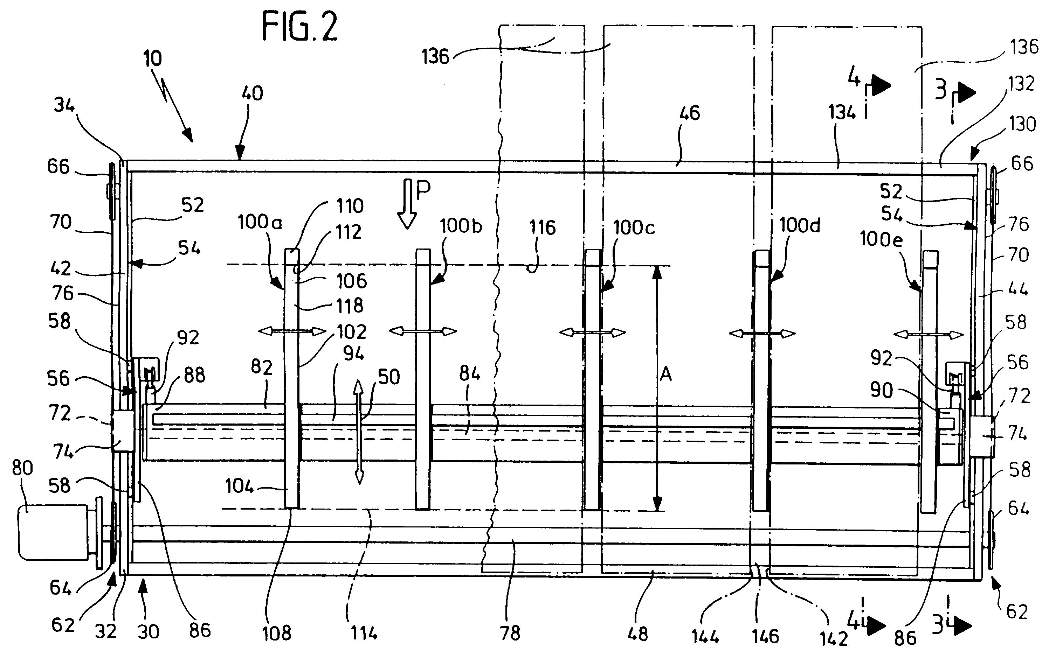

Ein Ausführungsbeispiel einer als Ganzes mit 10 bezeichneten Anschlageinrichtung, dargestellt in Fig. 1 und 2, ist vorzugsweise zum Anbau an eine in Fig. 1 als Ganzes mit 12 bezeichnete Blechbearbeitungsmaschine vorgesehen, wobei als Beispiel für eine derartige Blechbearbeitungsmaschine eine Blechbiegemaschine dargestellt ist, welche eine Oberwange 14, eine Unterwange 16 und eine Biegewange 18 aufweist, die alle an einem Maschinengestell 20 gehalten sind, wobei die Oberwange 14 und die Unterwange 16 zum Festlegen einer Platine 22 relativ zum Maschinengestell 20 höhenverstellbar sind, während die Biegewange 18 vorzugsweise um eine Schwenkachse 24 zum Umbiegen eines vorderen Bereichs 22 a der Platine 22 schwenkbar ist.

Die Anschlageinrichtung 10 umfaßt ihrerseits ein als Ganzes mit 30 bezeichnetes Trägergestell, welches entweder selbständig aufgeständert sein kann oder, wie in Fig. 1 dargestellt, sich mit einem vorderen Bereich 32 auf der Unterwange 16 abstützt und beispielsweise in einem hinteren Bereich 34 durch einen Ständer 36 auf einer Bodenfläche 38 aufgestützt ist. Es ist aber auch eine freitragende Befestigung des Trägergestells 30 am Maschinengestell 20 oder an der Unterwange 16 möglich.

Wie insbesondere in Fig. 2 dargestellt, umfaßt das Trägergestell einen Trägerrahmen 40, welcher zwei parallel zueinander ausgerichtete Seitenträger 42 und 44 sowie zwei parallel zueinander verlaufende Querträger 46 und 48 aufweist. Dabei liegt in dem in Fig. 1 dargestellten Fall der vordere Querträger 48 auf der Unterwange 16 auf und verläuft parallel zur Schwenkachse 24 und somit im rechten Winkel zu einer als Ganzes mit 50 bezeichneten Anschlagrichtung, in welcher die Anschlageinrichtung 10, wie später im einzelnen noch beschrieben, zum Anschlagen der Platine 22 wirksam ist.

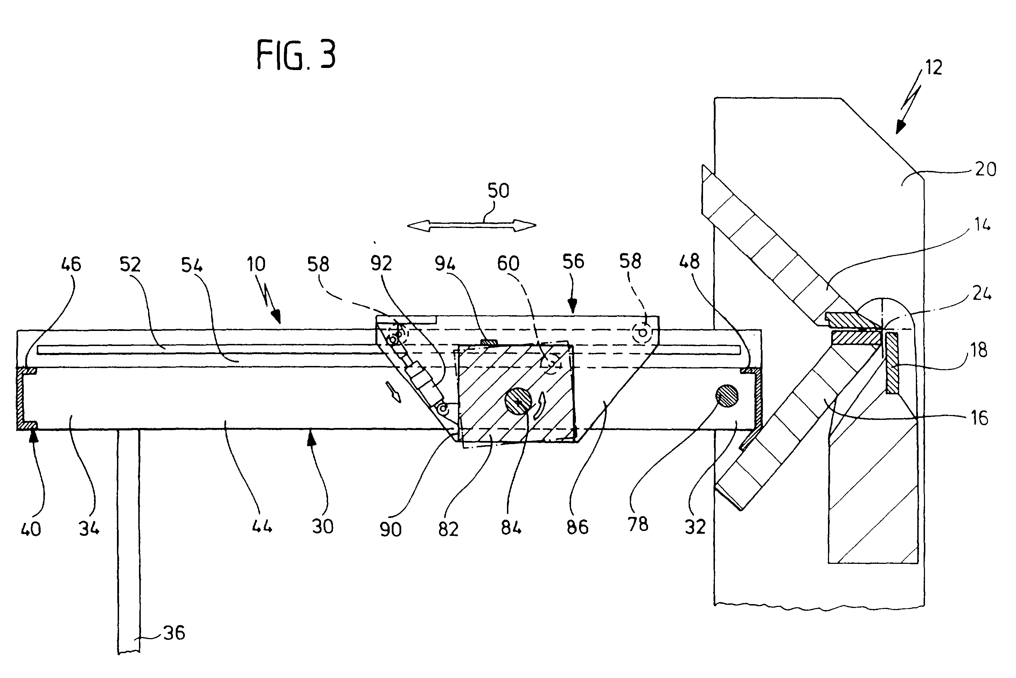

Die Seitenträger 42 und 44 erstrecken sich somit vorzugsweise parallel zur Anschlagrichtung 50 und sind außerdem, wie in Fig. 2 und 3 dargestellt, jeweils mit einer parallel zur Anschlagrichtung 50 verlaufenden Längsführung 52 versehen, die vorzugsweise auf der jeweils dem anderen Seitenträger 44, 42 zugewandten Innenseite 54 des jeweiligen Seitenträger 42, 44 angeordnet ist. An dieser Längsführung 52 ist ein als Ganzes mit 56 bezeichneter Einstellwagen beispielsweise mittels oberen Rollen 58 und unteren Rollen 60 verfahrbar geführt.

Die beiden an den einander gegenüberliegenden Seitenträgern 42, 44 angeordneten Einstellwagen 56 sind, wie in Fig. 1 dargestellt, jeweils mit einem als Ganzes mit 62 bezeichneten Einstellantrieb in Führungsrichtung der Längsführungen 52 synchron verfahrbar. Jeder Einstellantrieb 62 weist beispielsweise ein vorderes, nahe dem vorderen Querträger 48 angeordnetes Kettenrad 64 und ein hinteres, nahe dem hinteren Querträger 46 angeordnetes Kettenrad 66 auf, über welche eine Endloskette 70 verläuft. Beispielsweise ist dabei ein oberes Kettentrum 72 mit einem Mitnehmerbügel 74 verbunden, welcher sich von dem längs der Innenseite 54 des jeweiligen Seitenträgers 42, 44 laufenden Einstellwagen 56 über den jeweiligen Seitenträger 42, 44 hinweg zu dem auf einer Außenseite 76 des jeweiligen Seitenträgers 42, 44 vorzugsweise angeordneten Einstellantrieb 62 erstreckt und an dem parallel zur Außenseite 76 verlaufenden oberen Kettentrum 72 angreift.

Die beiden vorderen Kettenräder 64 sind, wie in Fig. 2 dargestellt, vorzugsweise auf einer gemeinsamen Antriebswelle 78 sitzend von dieser angetrieben, wobei die Antriebswelle 78 von einem Einstellmotor 80 angetrieben ist.

Dadurch, daß an jedem der Seitenträger 42, 44 ein Einstellantrieb 62 angeordnet und mittels der Antriebswelle 78 und dem Einstellmotor 80 beide Einstellantriebe 62 synchron angetrieben sind, sind die beiden Einstellwagen 56 synchron zueinander in der Anschlagrichtung 50 positionierbar.

Zwischen den beiden Einstellwagen 56 erstreckt sich ein Anschlagträger 82, welcher parallel zu den Querträgern 46, 48 verläuft und vorzugsweise auch parallel zur Schwenkachse 24 der Blechbearbeitungsmaschine 12 ausgerichtet ist, und zwar in allen Stellungen der Einstellwagen 56.

Der Anschlagträger 82 ist, wie in Fig. 3 dargestellt, um eine Schwenkachse 84, die ebenfalls parallel zu den Querträgern 46, 48 und vorzugsweise auch parallel zur Schwenkachse 24 der Blechbearbeitungsmaschine 12 verläuft, relativ zu den Einstellwagen 56, vorzugsweise zu deren Basisplatte 86 verschwenkbar. Hierzu ist im Bereich von beiden Enden 88, 90 des Anschlagträgers 82 ein Schwenkantrieb 92, vorzugsweise ausgebildet als Pneumatikzylinder, angeordnet, welcher einerseits, beispielsweise mit einem Zylindergehäuse, an dem Anschlagträger 82 und andererseits, beispielsweise mit einer Kolbenstange, an dem jeweiligen Einstellwagen 56, insbesondere der Basisplatte 86 desselben angreift und somit in der Lage ist, den Anschlagträger 82 als Ganzes zwischen mindestens zwei Endstellungen zu verschwenken.

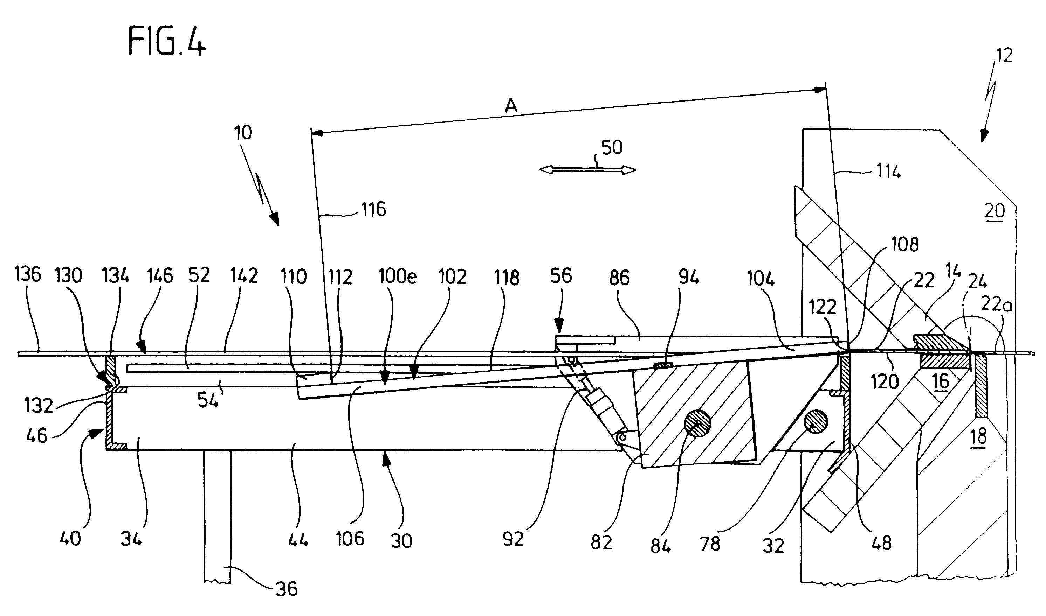

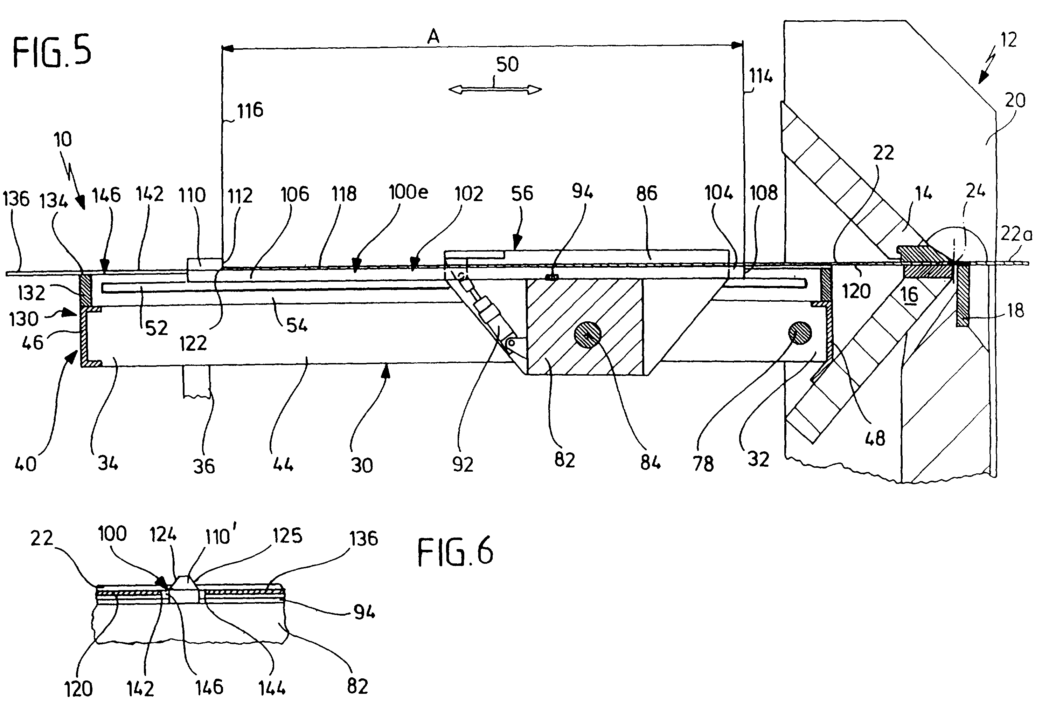

Der Anschlagträger 82 weist seinerseits eine mit 94 bezeichnete und sich parallel zur Schwenkachse 84 erstreckende Querführung auf, in welcher eine Vielzahl von Anschlagelementen in Längsrichtung der Querführung 94, also parallel zur Schwenkachse 24, verschieblich, jedoch ansonsten, wie in Fig. 4 und 5 dargestellt, drehfest und somit gemeinsam mit dem Anschlagträger 82 um die Schwenkachse 84 verschwenkbar, in Längsrichtung der Querführung 94 fixierbar sind.

Jedes dieser Anschlagelemente 100 umfaßt, wie in Fig. 4 und 5 dargestellt, einen Anschlagarm 102 welcher sich mit einem vorderen Bereich 104 in Richtung der Blechbearbeitungsmaschine 12 und mit einem hinteren Bereich 106 von dieser weg erstreckt.

Der vordere Bereich 104 weist dabei eine durch eine vordere Stirnseite des Anschlagarms 102 gebildete vordere Anschlagfläche 108 auf und der hintere Bereich 106 des Anschlagarms 102 trägt einen Anschlagkörper 110, welcher sich über dem hinteren Bereich 106 nach oben in Richtung der Platine 22 überstehend erhebt und stirnseitig eine hintere Anschlagfläche 112 trägt.

Sowohl die vorderen Anschlagflächen 108 als auch die hinteren Anschlagsflächen 112 aller Anschlagelemente 100 liegen jeweils auf einer gemeinsamen Anschlaglinie 114 bzw. 116, welche parallel oder schräg zur Schwenkachse 84 des Anschlagträgers 82 verläuft.

Ist der jeweilige Anschlagarm 102 dabei in eine zweite, in Fig. 5 dargestellte aktive Stellung geschwenkt, in welcher eine Oberkante 118 jedes Anschlagarms 102 unterhalb oder maximal in Höhe einer Auflagefläche 120 der Platine verläuft, so steht der Anschlagkörper 110 über die Auflagefläche 120 für die Platine 22 über und somit auch dessen hintere Anschlagfläche 112, gegen welche die Platine 22 mit einer Hinterkante 122 beispielsweise in einem gewünschten definierten Abstand von der Schwenkachse 24 der Blechbiegemaschine 12 positionierbar ist.

Das heißt in der zweiten aktiven Schwenkstellung der Anschlagarme sind jeweils deren hintere Anschlagflächen 112 wirksam, so daß die hintere Anschlaglinie 116 die Position der Hinterkante 122 der Platine 22 definiert.

Durch Verschwenken des gesamten Anschlagträgers 82 in eine erste aktive Schwenkstellung ist, wie in Fig. 4 dargestellt, der Anschlagkörper 110 unter die Auflagefläche 120 absenkbar, während im Gegenzug dann der vordere Bereich 104 jedes Anschlagarms 102 mit der vorderen Anschlagfläche 108 über die Auflagefläche 120 für die Platine übersteht und somit für ein Anschlagen der Hinterkante 122 der Platine 22 die vordere Anschlaglinie 114 maßgebend ist.

Die vorderen Anschlagflächen 108 und die hinteren Anschlagflächen 112 weisen vorzugsweise einen Abstand A voneinander auf, welcher maximal gleich groß oder kleiner ist als ein Einstellweg E, innerhalb von welchem der Anschlagträger 82 als Ganzes in der Anschlagrichtung 50 mittels der Einstellwagen 56 verfahrbar ist. Damit ist je nach dem, ob die Anschlagelemente 100 in der ersten oder in der zweiten aktiven Stellung stehen, die Möglichkeit geschaffen, die Hinterkante 122 der Platine 22 innerhalb eines Anschlagbereichs der Länge E + A definiert zu positionieren, wobei jeweils die Einstellwagen 56 innerhalb des Einstellweges E zu positionieren sind, während eine Verlängerung oder Verkürzung des Anschlagbereichs um die Strecke A durch Verschwenken des gesamten Anschlagträgers 82 mit sämtlichen Anschlagelementen 100 in die erste oder zweite aktive Stellung mittels der Schwenkantriebe 92 erfolgt.

Gleichzeitig besteht die Möglichkeit, durch Verschieben der Anschlagelemente 100 innerhalb der Querführung 94 deren Position längs des Anschlagträgers 82 beliebig einzustellen.

Bei einer Variante des ersten Ausführungsbeispiels ist es auch noch möglich, zusätzlich zur ersten und zweiten aktiven Stellung der Anschlagelemente 100 für diese eine dritte inaktive Stellung vorzusehen, in welcher keine der Anschlagflächen 108 oder 112 über die Auflagefläche 120 übersteht. Diese Variante eröffnet die Möglichkeit, mehrere Reihen von Anschlagelementen 100 in einer Anschlagrichtung so aufeinanderfolgend anzuordnen und nur die vorderen oder hinteren Anschlagflächen einer der Reihen in die aktive Stellung zu bringen.

Vorzugsweise ist das Trägergestell 30 der erfindungsgemäßen Anschlageinrichtung 10 auch als Tisch 130 ausgebildet, welcher sich mit einem Tischrahmen 132 in Einstellrichtung 50 über das Trägergestell 30 mindestens soweit erstreckt, daß in allen Positionen der Anschlagflächen 108, 112 die Anschlaglinien 114 bzw. 116 noch auf einer Tischoberfläche 134 liegen, welche die Auflagefläche 120 für die Platinen 22 definiert. Die Tischoberfläche wird dabei gebildet, durch in den Tischrahmen 132 einlegbare streifenförmige Tischbleche 136, welche sich vorzugsweise zwischen dem vorderen Querträger 48 und dem hinteren Querträger 46 des Trägerrahmens 40 erstrecken und auf diesen aufliegen. Vorzugsweise sind dabei die streifenförmigen Tischbleche 136 so in den Trägerrahmen 40 eingelegt, daß zwischen einander benachbarten Seitenkanten 142 bzw. 144 auf nebeneinanderliegender Tischbleche 136 ein streifenförmiger Freiraum 146 verbleibt, welcher sich in Anschlagrichtung 50 zwischen dem vorderen Querträger 48 und dem hinteren Querträger 46 erstreckt, so daß in diesem Freiraum 146 zwischen zwei Tischblechen 136 mindestens ein Anschlagelement durch Bewegen des Anschlagträgers 82 in Anschlagrichtung 50 verfahrbar ist.

Die Tischbleche 136 sind vorzugsweise in Querrichtung in beliebigen Positionen in den Trägerrahmen 40 einlegbar und/oder in beliebigen Breiten quer zur Anschlagrichtung 50 verfügbar, so daß die Möglichkeit besteht, die Anschlagelemente 100 jeweils stets so zu positionieren, wie es für ein optimales Anschlagen der Hinterkante 122 der Platine 22 erforderlich ist.

Bei einer besonders bevorzugten Variante des ersten Ausführungsbeispiels einer erfindungsgemäßen Anschlageinrichtung ist, wie in Fig. 6 dargestellt, der Anschlagkörper 110' im Querschnitt, und zwar in Anschlagrichtung 50 gesehen, trapezförmig oder dreieckförmig, halbkreisförmig oder halboval ausgebildet, wobei die beiden Schrägflächen 124 und 125 des Anschlagkörpers in dem Fall, daß sich dieser über die Auflagefläche 120 erhebt, als Auflaufflächen dienen, um Platinen 22 auf der Auflagefläche 120 aufliegend entweder quer zur Einstellrichtung 50 zu verschieben oder um eine senkrecht auf der Auflagefläche 120 stehenden Achse trotz über die Auflagefläche 120 überstehendem Anschlagkörper 110' drehen zu können.

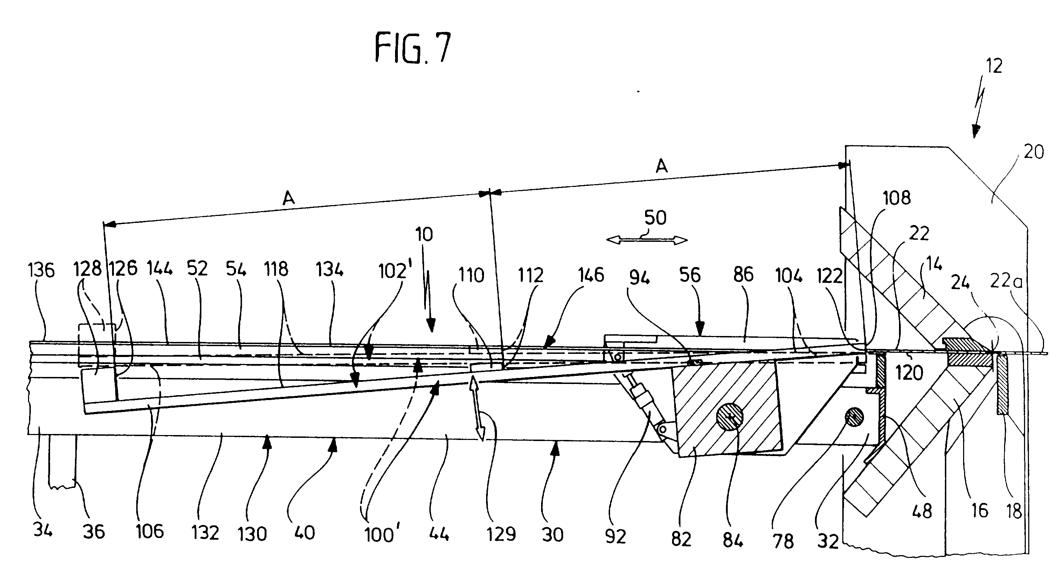

Bei einem zweiten Ausführungsbeispiel, dargestellt in Fig. 7, weist jedes der Anschlagelemente 100' drei auf dem Anschlagarm 102' sitzende Anschlagflächen auf, nämlich die Anschlagflächen 108 und 112 und zusätzlich eine dritte Anschlagfläche 126, welche alle im Abstand A voneinander angeordnet sind, der in gleicher Weise wie beim ersten Ausführungsbeispiel bemessen ist.

Die dritte Anschlagfläche 126 ist die hinterste der Anschlagflächen und so an einem Anschlagkörper 128 angeordnet, daß sie in einer dritten aktiven Stellung des Anschlagelements 100' über die Auflagefläche 120 übersteht, wenn die erste und die zweite Anschlagfläche 108, 112 noch unterhalb der Auflagefläche 120 liegen wie in Fig. 7 gestrichelt angedeutet.

Bei einem Verschwenken des Anschlagelements 100' ausgehend von der in Fig. 7 dargestellten ersten Stellung in Richtung des Pfeils 129 wird zunächst die dritte aktive Stellung des Anschlagelements 100' erreicht (in Fig. 7 gestrichelt dargestellt) und dann die zweite aktive Stellung in welcher die Anschlagfläche 112 - ähnlich wie in Fig. 5 dargestellt - wirksam ist. In dieser zweiten aktiven Stellung steht zwar die Anschlagfläche 126 ebenfalls über die Auflagefläche 120 über, dies ist jedoch ohne Bedeutung, da die vor dieser liegende Anschlagfläche 112 bereits wirksam ist.

Der Schwenkantrieb 92 ist bei diesem Ausführungsbeispiel so ausgebildet, daß er in drei definierte Stellungen einstellbar ist, wozu sich beispielsweise ein doppelter Zylinder eignet.

Im übrigen ist das zweite Ausführungsbeispiel mit dem ersten Ausführungsbeispiel identisch, so daß auf die Ausführungen hierzu vollinhaltlich Bezug genommen wird.

## Patentansprüche

1. Werkstückanschlageinrichtung für eine Werkzeugmaschine, insbesondere eine Blechbearbeitungsmaschine, umfassend ein Trägergestell (30), mehrere am Trägergestell (30) in einer quer zu einer Anschlagrichtung (50) verlaufenden Querrichtung im Abstand voneinander angeordnete, in Anschlagrichtung (50) bewegbare Anschlagelemente (100), mit jeweils einem Anschlagarm (102), welcher mit mindestens zwei in Anschlagrichtung (50) im Abstand voneinander angeordneten Anschlagflächen (108, 112, 126) versehen ist, die durch eine Schwenkbewegung des Anschlagelements (100) von einer unterhalb einer Auflagefläche (120) angeordneten inaktiven Stellung in eine über die Auflagefläche (120) überstehende aktive Stellung bringbar sind, wobei jedes Anschlagelement (100) in eine erste Stellung bringbar ist, in welcher eine erste nächstliegend der Werkzeugmaschine (12) angeordnete Anschlagfläche (108) in der aktiven Stellung steht, und in eine zweite Stellung bringbar ist, in welcher eine zweite Anschlagfläche (112, 126) in der aktiven Stellung steht, während die werkzeugmaschinenseitig derselben liegenden Anschlagflächen (108) in der inaktiven Stellung stehen,
**dadurch gekennzeichnet**, daß die Anschlagelemente (100) gemeinsam auf mindestens einem durch einen Einstellantrieb (62) gegenüber dem Trägergestell (30) in Anschlagrichtung (50) verfahrbaren und positionierbaren Einstellwagen (56) angeordnet sind und daß die Anschlagelemente (100) in der Querrichtung zur Anschlagrichtung (50) in unterschiedlichen Positionen positionierbar sind.

2. Werkstückanschlageinrichtung nach Anspruch 1, dadurch gekennzeichnet, daß der Anschlagarm (102) um eine Schwenkachse (84) verschwenkbar ist.

3. Werkstückanschlageinrichtung nach Anspruch 2, dadurch gekennzeichnet, daß der Anschlagarm (102) sich beiderseits der Schwenkachse (84) erstreckt.

4. Werkstückanschlageinrichtung nach einem der voranstehenden Ansprüche, dadurch gekennzeichnet, daß in Anschlagrichtung (50) aufeinanderfolgende Anschlagflächen (108, 112, 126) einen Abstand (A) voneinander aufweisen, welcher größer als ungefähr die Hälfte eines Einstellwegs (E) des mindestens einen Einstellwagens (56) ist.

5. Werkstückanschlageinrichtung nach einem der voranstehenden Ansprüche, dadurch gekennzeichnet, daß in Anschlagrichtung (50) aufeinanderfolgende Anschlagflächen (108, 112, 126) jeweils einen Abstand (A) voneinander aufweisen, welcher kleiner oder ungefähr gleich dem Einstellweg (E) des mindestens einen Einstellwagens (56) ist.

6. Werkstückanschlageinrichtung nach einem der voranstehenden Ansprüche, dadurch gekennzeichnet, daß die Anschlagelemente (100) auf einem verschwenkbaren und sich in der Querrichtung erstreckenden Anschlagträger (82) sitzen.

7. Werkstückanschlageinrichtung nach Anspruch 6, dadurch gekennzeichnet, daß der Anschlagträger (82) an dem mindestens einen Einstellwagen (56) schwenkbar gelagert ist.

8. Werkstückanschlageinrichtung nach Anspruch 7, dadurch gekennzeichnet, daß der Anschlagträger (82) mit einander gegenüberliegenden Endbereichen (88, 90) jeweils an einem Einstellwagen (56) gelagert ist.

9. Werkstückanschlageinrichtung nach Anspruch 8, dadurch gekennzeichnet, daß die Einstellwagen (56) synchron miteinander in der Anschlagrichtung (50) verfahrbar sind.

10. Werkstückanschlageinrichtung nach einem der Ansprüche 6 bis 9, dadurch gekennzeichnet, daß die Anschlagelemente (100) an dem Anschlagträger (82) in Querrichtung in unterschiedlichen Positionen positionierbar sind.

11. Werkstückanschlageinrichtung nach Anspruch 10, dadurch gekennzeichnet, daß die Anschlagelemente (100) in einer Querführung (94) des Anschlagträgers (82) verschiebbar angeordnet sind.

12. Werkstückanschlageinrichtung nach einem der voranstehenden Ansprüche, dadurch gekennzeichnet, daß der Anschlagarm (102') mindestens drei in Anschlagrichtung (50) hintereinanderliegend angeordnete Anschlagflächen (108, 112, 126) aufweist und derart bewegbar ist, daß das Werkstück an jeder der Anschlagflächen (108, 112, 126) ohne Behinderung durch die werkzeugmaschinenseitig derselben liegenden Anschlagflächen (108; bzw. 108, 112) anschlagbar ist.

13. Werkstückanschlageinrichtung nach einem der voranstehenden Ansprüche, dadurch gekennzeichnet, daß das Anschlagelement (100) an seiner vorderen Stirnseite die erste Anschlagfläche (108) trägt und in einem hinteren Bereich einen die andere Anschlagfläche (112, 126) aufweisenden Anschlagkörper (110, 128).

14. Werkstückanschlageinrichtung nach Anspruch 13, dadurch gekennzeichnet, daß der Anschlagkörper (110, 128) so ausgebildet ist, daß er sich über den Anschlagarm (102) erhebt und stirnseitig die sich quer zur Anschlagrichtung (50) erstreckende andere Anschlagfläche (112, 126) trägt.

15. Werkstückanschlageinrichtung nach Anspruch 14, dadurch gekennzeichnet, daß der Anschlagarm (102) als langgestreckte Leiste ausgebildet ist, welche stirnseitig die eine Anschlagfläche (108) trägt.

16. Werkstückanschlageinrichtung nach Anspruch 14 oder 15, dadurch gekennzeichnet, daß der Anschlagkörper (110) in Anschlagrichtung (50) gesehen eine Querschnittsform mit ansteigenden seitlichen Schrägen (124, 126) aufweist.

17. Werkstückanschlageinrichtung nach einem der voranstehenden Ansprüche, dadurch gekennzeichnet, daß der Einstellantrieb für eine Positionierung des mindestens einen Einstellwagens (56) als Spindel-, Ketten- oder Riementrieb ausgebildet ist.

18. Werkstückanschlageinrichtung nach einem der voranstehenden Ansprüche, dadurch gekennzeichnet, daß die Werkstückanschlageinrichtung (10) einen Tisch (130) bildet, welcher die Auflagefläche (120) für Werkstücke definiert.

19. Werkstückanschlageinrichtung nach Anspruch 18, dadurch gekennzeichnet, daß der Tisch (130) einen Tischrahmen (132) aufweist, in welchem Tischbleche (136) in Querrichtung in verschiedenen Positionen einlegbar sind.

20. Werkstückanschlageinrichtung nach Anspruch 18 oder 19, dadurch gekennzeichnet, daß zwischen in Querrichtung nebeneinanderliegenden Tischblechen (136) ein Freiraum (146) gegeben ist, in welchem eines der Anschlagelemente in Anschlagrichtung (50) verschiebbar ist.

## Claims

1. Workpiece stop device for a machine tool, in particular a sheet metal working machine, comprising a support frame (30), a plurality of stop elements (100) which are arranged on the support frame (30) at a distance from one another in a transverse direction extending transversely to a stop direction (50) and are movable in stop direction (50), each having a stop arm (102) provided with at least two stop surfaces (108, 112, 126) arranged at a distance from one another in stop direction (50), said stop surfaces being adapted to be brought by a pivotal movement of the stop element (100) from an inactive position arranged beneath a bearing surface (120) into an active position protruding above the bearing surface (120), each stop element (100) being adapted to be brought into a first position, in which a first stop surface (108) arranged closest to the machine tool (12) is in the active position, and being adapted to be brought into a second position, in which a second stop surface (112, 126) is in the active position while the stop surfaces (108) located on the machine tool side thereof are in the inactive position, characterized in that the stop elements (100) are arranged jointly on at least one adjustment carriage (56) displaceable in stop direction (50) and positionable by an adjustment drive (62) relative to the support frame (30), and that the stop elements (100) are positionable in different positions in the direction transverse to the stop direction (50).

2. Workpiece stop device as defined in claim 1,
characterized in that the stop arm (102) is pivotable about a pivot axis (84).

3. Workpiece stop device as defined in claim 2,
characterized in that the stop arm (102) extends on both sides of the pivot axis (84).

4. Workpiece stop device as defined in any one of the preceding claims, characterized in that stop surfaces (108, 112, 126) following one another in stop direction (50) have a distance (A) from one another greater than approximately half an adjustment path (E) of the at least one adjustment carriage (56).

5. Workpiece stop device as defined in any one of the preceding claims, characterized in that stop surfaces (108, 112, 126) following one another in stop direction (50) have a respective distance (A) from one another smaller than or approximately equal to the adjustment path (E) of the at least one adjustment carriage (56).

6. Workpiece stop device as defined in any one of the preceding claims, characterized in that the stop elements (100) are seated on a pivotable stop carrier (82) extending in the transverse direction.

7. Workpiece stop device as defined in claim 6,
characterized in that the stop carrier (82) is pivotally mounted on the at least one adjustment carriage (56).

8. Workpiece stop device as defined in claim 7,
characterized in that the stop carrier (82) is mounted with end regions (88, 90) located opposite one another on a respective adjustment carriage (56).

9. Workpiece stop device as defined in claim 8,
characterized in that the adjustment carriages (56) are displaceable in the stop direction (50) synchronously with one another.

10. Workpiece stop device as defined in any one of claims 6 to 9, characterized in that the stop elements (100) are adapted to be positioned in different positions on the stop carrier (82) in a transverse direction.

11. Workpiece stop device as defined in claim 10,
characterized in that the stop elements (100) are arranged for displacement in a transverse guide means (94) of the stop carrier (82).

12. Workpiece stop device as defined in any one of the preceding claims, characterized in that the stop arm (102') has at least three stop surfaces (108, 112, 126) arranged one behind the other in stop direction (50) and is movable such that the workpiece is adapted to abut on each of the stop surfaces (108, 112, 126) without any hindrance by the stop surfaces (108; or 108, 112) located on the machine tool side thereof.

13. Workpiece stop device as defined in any one of the preceding claims, characterized in that the stop element (100) bears the first stop surface (108) on its front end face and in a rear region a stop member (110, 128) having the other stop surface (112, 126).

14. Workpiece stop device as defined in claim 13,
characterized in that the stop member (110, 128) is designed such that it rises above the stop arm (102) and bears on its end face the other stop surface (112, 126) extending transversely to the stop direction (50).

15. Workpiece stop device as defined in claim 14,
characterized in that the stop arm (102) is designed as an elongated bar bearing the one stop surface (108) on its end face.

16. Workpiece stop device as defined in claim 14 or 15, characterized in that the stop member (110) has, when seen in stop direction (50), a cross-sectional shape with upwardly inclined side bevels (124, 126).

17. Workpiece stop device as defined in any one of the preceding claims, characterized in that the adjustment drive for a positioning of the at least one adjustment carriage (56) is designed as a worm, chain or belt drive.

18. Workpiece stop device as defined in any one of the preceding claims, characterized in that the workpiece stop device (10) forms a table (130) defining the bearing surface (120) for workpieces.

19. Workpiece stop device as defined in claim 18, characterized in that the table (130) has a table framework (132) in which table plates (136) are insertable in different positions in a transverse direction.

20. Workpiece stop device as defined in claim 18 or 19, characterized in that between table plates (136) located next to one another in transverse direction there is a space (146) in which one of the stop elements is displaceable in stop direction (50).

## Revendications

1. Dispositif de butée pour pièces à usiner pour une machine-outil, en particulier une machine de transformation de tôles, comprenant un bâti de support (30), plusieurs éléments de butée (100) disposés sur le bâti de support (30) à distance l'un de l'autre dans une direction transversale s'étendant transversalement par rapport à une direction de butée (50) et mobiles dans la direction de butée (50), présentant chacun un bras de butée (102) qui est doté d'au moins deux surfaces de butée (108, 112, 126) qui sont disposées à distance l'une de l'autre dans la direction de butée (50) et qui peuvent être amenées par un déplacement de pivotement de l'élément de butée (100) depuis une position inactive disposée en dessous d'une surface de butée (120) jusque dans une position active débordant au-delà de la surface de butée (120), chaque élément de butée (100) pouvant être amené dans une première position dans laquelle une première surface de butée (108) située la plus proche de la machine-outil (12) est dans la position active et pouvant être amené dans une deuxième position dans laquelle une deuxième surface de butée (112, 126) est dans la position active pendant que les surfaces de butée (108) situées du même côté de la machine-outil sont dans la position inactive,
caractérisé en ce que les éléments de butée (100) sont tous disposés sur au moins un chariot de réglage (56) qui peut être déplacé et positionné par rapport au bâti de support (30) par un entraînement de réglage (62) dans la direction de butée (50), et en ce que les éléments de butée (100) peuvent être placés dans la direction transversale en différentes positions par rapport à la direction de butée (50).

2. Dispositif de butée pour pièces à usiner selon la revendication 1, caractérisé en ce que le bras de butée (102) peut pivoter autour d'un axe de pivotement (84).

3. Dispositif de butée pour pièces à usiner selon la revendication 2, caractérisé en ce que le bras de butée (102) s'étend des deux côtés de l'axe de pivotement (84).

4. Dispositif de butée pour pièces à usiner selon l'une des revendications précédentes, caractérisé en ce que les surfaces de butée (108, 112, 126) successives dans la direction de butée (50) présentent l'une par rapport à l'autre un écart (A) qui est supérieur à environ la moitié d'un parcours de réglage (E) du chariot de réglage (56) au moins présent.

5. Dispositif de butée pour pièces à usiner selon l'une des revendications précédentes, caractérisé en ce que chacune des surfaces de butée (108, 112, 126) successives dans la direction de butée (50) présente par rapport aux autres un écart (A) qui est inférieur ou environ égal au parcours de réglage (E) du chariot de réglage (56) au moins présent.

6. Dispositif de butée pour pièces à usiner selon l'une des revendications précédente, caractérisé en ce que les éléments de butée (100) sont placés sur un support de butée (82) pivotant et s'étendant dans la direction transversale.

7. Dispositif de butée pour pièces à usiner selon la revendication 6, caractérisé en ce que le support de butée (82) est monté à pivotement sur au moins un chariot de réglage (56).

8. Dispositif de butée pour pièces à usiner selon la revendication 7, caractérisé en ce que les supports de butée (82) sont chacun montés sur un chariot de réglage (56) par leurs zones d'extrémité (88, 90) mutuellement opposées.

9. Dispositif de butée pour pièces à usiner selon la revendication 8, caractérisé en ce que les chariots de réglage (56) peuvent être déplacés dans la direction de butée (50) d'une manière synchronisée l'un par rapport à l'autre.

10. Dispositif de butée pour pièces à usiner selon l'une des revendications 6 à 9, caractérisé en ce que les éléments de butée (100) peuvent être positionnés sur le support de butée (82) en différentes positions dans la direction transversale.

11. Dispositif de butée pour pièces à usiner selon la revendication 10, caractérisé en ce que les éléments de butée (100) sont disposés à coulissement dans un guide transversal (94) du support de butée (82).

12. Dispositif de butée pour pièces à usiner selon l'une des revendications précédentes, caractérisé en ce que le bras de butée (102') présente au moins trois surfaces de butée (108, 112, 126) disposées l'une derrière l'autre dans la direction de butée (50) et peut être déplacé de telle sorte que la pièce puisse venir buter contre chacune des surfaces de butée (108, 112, 126) sans être gênée par les surfaces de butée (108; ou 108, 112) situées du même côté de la machine-outil.

13. Dispositif de butée pour pièces à usiner selon l'une des revendications précédentes, caractérisé en ce que l'élément de butée (100) porte la première surface de butée (108) sur son côté frontal avant et, dans une région arrière, un corps de butée (110, 128) présentant les autres surfaces de butée (112, 126).

14. Dispositif de butée pour pièces à usiner selon la revendication 13, caractérisé en ce que le corps de butée (110, 128) est configuré de telle sorte qu'il se relève au-dessus du bras de butée (102) et qu'il porte du côté frontal les autres surfaces de butée (112, 126) s'étendant transversalement par rapport à la direction de butée (50).

15. Dispositif de butée pour pièces à usiner selon la revendication 14, caractérisé en ce que le bras de butée (102) est configuré comme latte allongée qui porte frontalement l'une des surfaces de butée (108).

16. Dispositif de butée pour pièces à usiner selon la revendication 14 ou 15, caractérisé en ce que le corps de butée (110) présente, vu dans la direction de butée (50), une section transversale dont la forme présente des pentes (124, 126) latérales montantes.

17. Dispositif de butée pour pièces à usiner selon l'une des revendications précédentes, caractérisé en ce qu'un entraînement de réglage pour un positionnement du chariot de réglage (56) au moins présent est configuré comme entraînement à broche, à chaîne ou à courroie.

18. Dispositif de butée pour pièces à usiner selon l'une des revendications précédentes, caractérisé en ce que le dispositif de butée pour pièces (10) forme une table (130) qui définit la surface de pose (120) des pièces.

19. Dispositif de butée pour pièces à usiner selon la revendication 18, caractérisé en ce que la table (130) présente un cadre de table (132) dans lequel des tôles de table (136) peuvent être posées en différentes positions dans la direction transversale.

20. Dispositif de butée pour pièces à usiner selon la revendication 18 ou 19, caractérisé en ce qu'entre les tôles de table (136) situées les unes à côté des autres dans la direction transversale existe un espace libre (146) dans lequel l'un des éléments de butée peut être déplacé dans la direction de butée (50).
